# EUROPEAN PATENT SPECIFICATION

(11) **EP 3 079 382 B1**
(45) Date of publication and mention of the grant of the patent: **17.06.2020**
(21) Application number: 16164493.5
(22) Date of filing: 08.04.2016
(51) Int. Cl.: H04W 4/00, H04W 88/06, H04W 24/10, H04W 88/04, H04W 4/08, H04W 4/80

(54) **METHOD FOR PERFORMING MDT MEASUREMENTS**
VERFAHREN ZUR DURCHFÜHRUNG VON MDT-MESSUNGEN
PROCÉDÉ PERMETTANT D'EFFECTUER DES MESURES MDT

(30) Priority: 09.04.2015 EP 15162925
(43) Date of publication of application: 12.10.2016
(73) Proprietor: IPCom GmbH & Co. KG, 82049 Pullach (DE)
(72) Inventor: SCHMIDT, Andreas, 38124 Braunschweig (DE); LUFT, Achim, 38118 Braunschweig (DE); HANS, Martin, 31162 Bad Salzdetfurth (DE); BIENAS, Maik, 38170 Schöppenstedt (DE)
(74) Representative: Tomlinson, Edward James

(56) References cited:
- US-A1- 2011 275 382
- US-A1- 2014 148 142
- "3rd Generation Partnership Project; Technical Specification Group Radio Access Network; Universal Terrestrial Radio Access (UTRA) and Evolved Universal Terrestrial Radio Access (E-UTRA); Radio measurement collection for Minimization of Drive Tests (MDT); Overall description; Stage 2 (Release 12)", 3GPP STANDARD; 3GPP TS 37.320, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.1.0, 4 July 2014 (2014-07-04), pages 1-25, XP050774637, [retrieved on 2014-07-04]

## Description

The present invention relates to the operation of a user equipment (UE) involved in device to device (D2D) communication for performing minimization of drive-tests, MDT, measurements.

The 3GPP standard setting body is currently in the process of defining direct D2D proximity detection and communication. This is sometimes referred to as ProSe (Proximity-based Service). 3GPP Rel-12 includes standard documents describing very basic D2D functionality.

While D2D proximity detection will be made available for all users, D2D communication usage is at present related to public safety applications and as such is restricted to first responders, such as policemen and fire fighters. This means that direct D2D communication among "normal" users that are in proximity to one another is currently out of scope of the standard. However, this might change in the future. Details about ProSe can be found in 3GPP TS 23.303, for example.

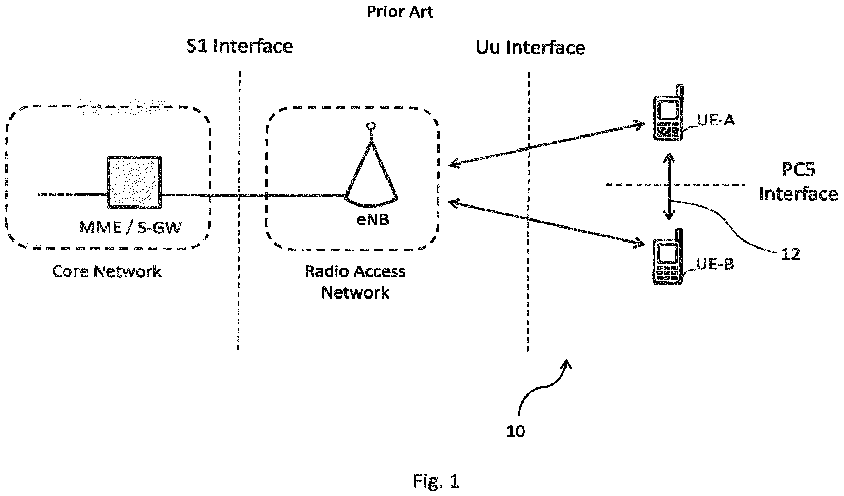

Fig. 1 shows a typical D2D communication arrangement 10. As shown in Fig. 1, an interface 12 defined for D2D/ProSe is termed "PC5" in 3GPP. Mobile devices, or user equipment (for example, UE-A and UE-B in Figure 1) that are connected over the PC5 interface form a "D2D-Cluster" (or are members of a "D2D-Cluster"). According to 3GPP TS 23.303, data transmissions over the PC5 interface are connectionless, i.e. each data unit is individually addressed and routed based on information carried in each data unit.

Possible Radio Resource Control (RRC) states in LTE will now be described. In RRC_CONNECTED state, an RRC connection has been established for the transfer of data to/from the UE and mobility of a UE is infrastructure controlled and UE assisted. This means, based on measurements collected by and received from the UE, the infrastructure side may trigger handover from one base station (eNB) to another. In RRC_IDLE state, mobility is solely under control of the UE. This means, based on measurements collected by the UE, the UE itself continuously checks whether there are radio cells around that are better suited for the UE to camp on. A UE in RRC_IDLE is required to inform the infrastructure from time to time about changes of its tracking area (in order to guarantee reachability in case of paging). Details about the UE states in LTE and state transitions (including inter-RAT aspects) can be found in 3GPP TS 36.331.

Minimization of Drive Tests (MDT) is a feature introduced in 3GPP Rel-10 that enables operators to utilize user equipment to collect radio measurements and associated location information, in order to assess network performance while reducing the operating expense associated with traditional drive tests. The focus of MDT in Rel-10 was coverage optimization. However, in the increasingly complex wireless packet data networks of today, performance is affected by many different factors and cannot easily be estimated by simple radio measurements. Therefore, in 3GPP Rel-11, MDT was enhanced in order to provide a more complete view of network performance by adding Quality of Service (QoS) verification to the focus of MDT. 3GPP TS 37.320 defines two flavours of MDT: Immediate-MDT and Logged-MDT. For this invention, the latter of these is of relevance, where the UE is configured while it resides in RRC_CONNECTED for measurement collection during RRC_IDLE and reporting at a later point in time (after it has returned to RRC_CONNECTED mode of operation). As defined, the minimum requirement regarding the memory size for the storage of MDT Log-Files in UEs is 64 kB. An MDT Log-File may contain a list of measurements (such as RSRP/RSRQ values of the cell the UE is camping on as well as some measurements collected on inter-frequency and inter-RAT neighbour cells) plus corresponding time and location stamps.

UEs may be configured to receive multicast data in a downlink direction with the Multimedia Broadcast and Multicast Service (MBMS). The transport is defined in a best effort manner, i.e. in such a scenario no feedback is sent back to the base station and thus no re-transmission of multicast packets that could not be received properly is triggered. The LTE version of MBMS (eMBMS) was introduced in LTE in Rel-9. It is a simulcast transmission technique realised by transmission of identical waveforms at the same time from multiple cells (Multimedia Broadcast and Multicast Service Single-Frequency Network, MBSFN). An MBSFN transmission from multiple cells within an MBSFN Area is seen as a single transmission by a UE. MBMS reception is possible in RRC_CONNECTED state as well as in RRC_IDLE state independent of any incoming or outgoing dedicated connections. In LTE two logical downlink MBMS channels exist: MTCH (Multicast Traffic Channel, for user data) and MCCH (Multicast Control Channel, for control data). Both are multiplexed to the downlink transport channel MCH (Multicast Channel), which in turn is mapped to the PMCH (Physical Multicast Channel). According to 3GPP TS 23.303 there is no support for relaying multicast traffic between the Uu interface and the PC5 interface.

During the 3GPP RAN2 meeting #89 (February 2015, Athens, Greece) RAN2 started initial discussions on "Single-Cell Point-to-Multipoint (SC-PTM) Transmissions" based on 3GPP Study Item Description RP-142205. The scope of this study comprises (inter alia) investigations in the following areas:
- Define methods for a UE to receive multicast data intended for a group of users over the PDSCH (Physical Downlink Shared Channel), as opposed to the PMCH used for eMBMS.
- Study whether HARQ feedback and LTE Channel State Information (CSI) reports are useful for Single-Cell Point-to-Multipoint transmissions.

The SC-PTM Study Item is an investigation directed to enabling multicast transmissions from the base station to a multitude of UEs over the PDSCH in a single cell (i.e. without the need for the infrastructure to establish an MBSFN).

As the name suggests, the PDSCH is a shared channel and hence its Resource Blocks (RBs) are shared among all active connections. Downlink transmissions on the PDSCH may require feedback in uplink direction (HARQ ACK/NACK signalling as well as RLC retransmissions). With respect to the HARQ procedure, an ACK/NACK message for downlink sub frame #n is sent on uplink sub frame #n+4 (in an FDD configuration of LTE).

US 2014/0133318 A1 describes usage of device-to-device direct communication (D2D) in the context of broadcast / multicast specifically for group calls. The patent describes a relay that broadcast downlink data that it received via unicast from the mobile network in a broadcast (SFN) manner. The publication does not describe any feedback mechanism for received broadcast data that transmits feedback in the uplink via a relay or similar entity. Also, a consolidation of such feedback is not mentioned. On the contrary, UEs that need to send feedback (specifically about ability to receive group calls) need to maintain and use their unicast connection to the network in parallel for that purpose.

US 8,224,343 B2 describes an uplink feedback mechanism for data packets received in the downlink via broadcast in which feedback from different UEs regarding the same broadcast service is sent in the same time-frequency-resource so that the feedback (ACK / NAK) overlaps. The patent does not describe usage of a relay or similar entity at all. Combining the feedback information comprises only the natural overlapping of the individual signals sent in the same resources; there is no entity that provides forwarding and/or consolidation.

US 2008/0267113 A1 describes a system using relay stations and base stations for providing broadcast / multicast data to UEs. In the system, the UE that receive broadcast data from relay stations as well as UEs receiving from a base station send their respective feedback to the base station. The base station forwards feedback from UEs receiving broadcast from relay stations to the relay stations. The publication does not describe using any functionality of relay stations in the uplink, neither simple forwarding nor consolidation of feedback information.

WO 2013/123674 A1 discloses a system and apparatuses that use a device-to-device network to relay information from a base station to a UE in the D2D network and vice versa. Broadcast is used to transmit information about available D2D UEs and/or relays in an area. A feedback mechanism provides information from the relay to the base station about successful forwarding of data to the respective UE in the D2D network. The publication does not describe multicast / broadcast data transfer, related feedback and combination or consolidation of the same.

US 2014/0148142 A1 describes a technique of using an in coverage UE for reporting MDT measurements of out of coverage UEs while US 2011/0275382 A1 describes the signalling of D2D signal measurements to an eNodeB for the eNodeB to control the D2D transmissions.

US 2011/275382 A1 relates to reporting MDT measurements.

Whether and how a feedback mechanism for multicast downlink transmissions on the PDSCH is specified is the subject of a new 3GPP Study Item and thus yet undefined. The present invention provides a method of performing minimization of drive tests according to claim 1.

In a preferred embodiment, a D2D-Cluster Representative is selected and configured for the consolidation of data that was received over the PC5 interface. The data to be preprocessed (consolidated) is ideally suited for a statistical analysis on the infrastructure side in order to allow easier and faster assessment.

In one embodiment of the present invention the infrastructure side appoints a D2D-Cluster Representative. In another embodiment D2D-Cluster members negotiate among themselves and decide on the selection of roles of the various D2D-Cluster members (i.e. to appoint a representative) autonomously (e.g., based on guidance received from the infrastructure).

The underlying idea is to use a second radio link, such as the PC5 interface that was developed in the context of D2D, for the exchange of
measurement related messages, such as
- measurement configuration messages, and/or
- measurement coordination messages, and/or
- measurement reports,
retransmission related messages, such as
retransmission configuration messages, and/or
retransmission coordination messages, and/or
feedback messages, and/or
retransmission control information,
c-plane type messages in general,
between mobile devices (UEs) of a given D2D-Cluster.

In general, the PC5 interface is used for the exchange of control data for network management purposes. This control data is then consolidated by a D2D-Cluster Representative before it is relayed to the network infrastructure over a single link.

In doing so, the need for each UE to establish a distinct link to the network infrastructure is reduced and UEs are made reachable for the exchange of c-plane data (e.g., measurement reports, retransmission feedback, etc.) that were not reachable before.

The invention enables transmission of
measurement reports (for instance in the context of MDT),
feedback on multicast reception (for instance in the context of SC-PTM),
other c-plane type messages, for instance messages needed for efficient radio resources utilization and network management purposes,
over the PC5 interface thereby mitigating the deficiencies experienced by UEs that are lacking the required uplink resources or that are residing in RRC_IDLE or that are temporarily out of network coverage.

In general, the invention enables bi-directional transmissions of
measurement related messages,
retransmission related messages,
other types of c-plane messages,
over the PC5 interface. This means, a missing or defective LTE Uu connection may be compensated by an active PC5 connection using a D2D-Cluster Representative for some sort of range extension.

Furthermore, the invention enables a more efficient usage of available uplink resources on the LTE Uu interface, as the amount of data to be signalled to the base station may be reduced. For instance, the D2D-Cluster Representative may be configured to pre-process (e.g., consolidate or filter) the data received over the PC5 interface from at least one further mobile device. For example, the D2D-Cluster Representative may apply statistical consolidation algorithms to measurement samples and/or instances of feedback information (ACK/NAK) received from various neighbouring D2D-Cluster members. Instead of transmitting a large number of messages from multiple UEs only one common message may be generated and transmitted on the limited uplink resources by the D2D-Cluster Representative on behalf of the entire D2D-Cluster. The calculations performed by the D2D-Cluster Representative may include averaging of values over multiple mobile devices and/or over time.

The common uplink message generated by the D2D-Cluster Representative may comprise consolidated measurements or common feedback information (acknowledgements) and may be sent by the D2D-Cluster Representative in a more coordinated way (as opposed to multiple mobile device UE-B sending separate messages in uplink direction).

The invention will now be described, by way of example only, with reference to the accompanying drawings in which
- Fig. 1: is an illustration of a prior art D2D communication arrangement;
- Fig. 2: is an illustration of three communication scenarios;
- Fig. 3: is a schematic diagram of a D2D cluster arrangement;
- Fig. 4: is a schematic diagram of a further D2D cluster arrangement;
- Fig. 5: is a schematic diagram of a D2D cluster arrangement illustrating consolidated reporting;
- Fig. 6: shows a first instance message sequence;
- Fig. 7: shows a second instance message sequence;
- Fig. 8: is a schematic representation of a D2D cluster representative;
- Fig. 9: shows a message sequence for the arrangement of Fig. 8;
- Fig. 10: shows an alternative message sequence for the arrangement of Fig. 8;
- Fig. 11: is a schematic representation of a further D2D cluster representative;
- Fig. 12: is a schematic diagram of a still further D2D cluster arrangement; and
- Fig. 13: shows a message sequence of yet further arrangement

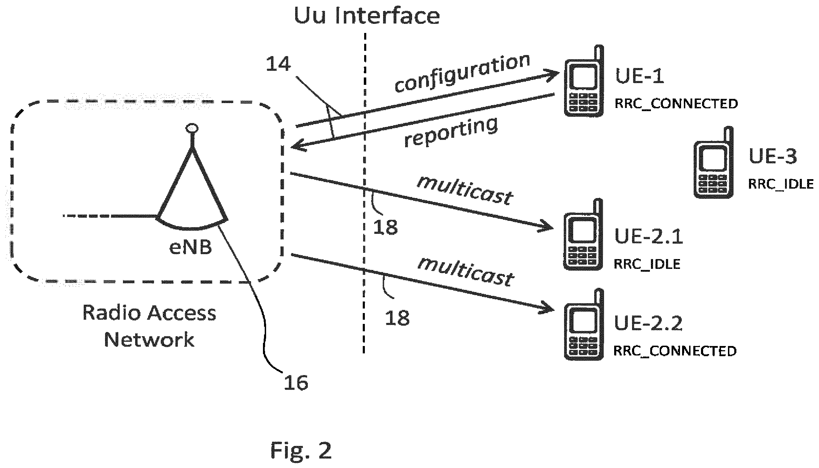

Figure 2 shows three scenarios that are relevant for the present invention.

### Scenario #1:

In the first scenario, a UE, UE-1, is residing in RRC_CONNECTED mode of operation. It has a bidirectional unicast connection 14 with a base station 16, denoted eNB. The eNB configures UE-1 to perform measurements on dedicated and common downlink resources for RRM (Radio Resource Management) purposes. This UE regularly reports its measurements to the eNB.

### Scenario #2:

In the second scenario, there is a unidirectional multicast transmission 18 over the PMCH and/or PDSCH from the base station to a number of UEs residing in coverage of a given radio cell. The multicast data is received by a first UE, UE-2.1, (which is residing in RRC_IDLE mode of operation), but it cannot be acknowledged. According to state-of-the-art multicast transmissions received over the PMCH do not require ACK/NACK signalling in uplink direction. ACK/NACK signalling in uplink direction can only be configured for data received in unicast mode over the PDSCH. In case of UE-2.1 (which is residing in RRC_IDLE mode of operation) there is no uplink connection that could be used for feedback indication.

The unidirectional multicast transmission 18 over the PMCH and/or PDSCH from the base station 16 is transmitted to a number of UEs residing in coverage of a given radio cell. The multicast data is received by a second UE, UE-2.2, which is residing in RRC_CONNECTED mode of operation. Although there is an active uplink connection between UE-2.2 and the eNB, UE-2.2 might not be able to acknowledge the receipt of multicast data, because uplink feedback about multicast data is not specified and if it was, there would not be enough radio resources available on uplink channels towards the eNB for feedback of all UEs receiving multicast data in downlink. A simple definition of uplink feedback data (e.g., based on the feedback mechanism used for unicast data received over the PDSCH) would very quickly lead to a massive overload of uplink resources; for instance when multicast data is transmitted to a large number of UEs in a SC-PTM scenario (as described above), and feedback about multicast transmissions over the PDSCH is requested from all (or a multitude of) UEs. The situation deteriorates even more when multicast feedback is requested for more than one physical downlink channel (i.e. when PMCH and PDSCH are combined for multicast dissemination in downlink direction).

### Scenario #3:

In a third scenario, a UE, UE-3, is also residing in RRC_IDLE mode of operation. Earlier on it was configured to perform Logged-MDT. Thus, in its current state it is creating an MDT Log-File for reporting at a later point in time (when it is back in RRC_CONNECTED). An MDT Log-File may comprise RSRP/RSRQ values of the cell the UE is camping on and some additional measurements collected on inter-frequency and inter-RAT neighbour cells plus corresponding time and location stamps.

In the communication systems to date, certain deficiencies arise in connection with the three scenarios outlined above.

In scenario #2, the Mobile Network Operator (MNO) has no chance to receive any feedback from those UEs that receive unidirectional multicast transmissions from the base station in RRC_IDLE (such as UE-2.1) simply because there is no uplink connection that could be used for reporting. Consequently, a *controlled* retransmission of any missed multicast data packets is not possible. The establishment of an RRC Connection just for the purpose of transmitting multicast feedback would waste the cell's radio resources as well as the base station's and UE's memory, computational and power resources.

Additionally, for UEs already residing in RRC_CONNECTED for other reasons (such as UE-2.2) sending feedback about unidirectional multicast transmissions received over PMCH and/or PDSCH may be problematic when the number of UEs trying to access the limited uplink resource for feedback submission (e.g., the PUCCH for HARQ ACK/NACK feedback) becomes too big.

In connection with scenario #3, the performance of Logged-MDT depends very much on the memory size reserved for the storage of MDT Log-Files in the UEs. If the memory reserved for Logged-MDT is full the UE stops logging. If the MNO does not managed to trigger retrieval of an MDT Log-File (within a time span of at most 48 hours) for instance because the UE does not return to RRC_CONNECTED, the MDT measurements are lost and all of the UE's efforts were done in vain.

Accordingly, there are certain situations in which the infrastructure side cannot get valuable feedback information (e.g., for multicast retransmissions, cf. scenario #2) and/or measurement results (e.g., for network management purposes, cf. scenario #3).

The present invention attempts to mitigate these deficiencies taking advantage of the upcoming direct Device-to-Device (D2D) connection between mobile devices (PC5 interface), thereby extending the D2D "direct communication" feature beyond its currently restricted mode for public safety only.

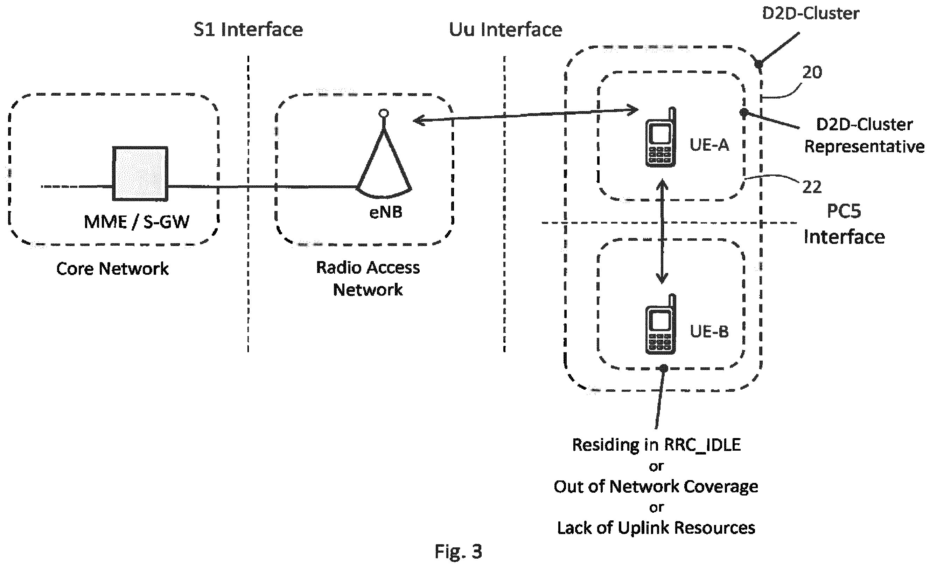

In Figure 3, a D2D-Cluster 20 made up of two UEs (UE-A and UE-B) is depicted. UE-A is acting as a D2D-Cluster Representative 22 in accordance with the present invention. The D2D-Cluster Representative 22 comprises pre-processing (i.e. data consolidation) functions according to the invention. Details of these functions will be discussed below.

Not all measurement samples or instances of feedback information may be suited for consolidation and statistical assessment (for example, when the infrastructure side demands UE specific data). However, there are quite a few types of measurements or instances of feedback information where the consolidation and statistical assessment makes sense and is beneficial in terms of uplink resource utilization as described in detail below. Configuration of the data consolidation functions/algorithms is therefore explicitly included in the scope of the present invention.

In many cases the desired measurement result or feedback information doesn't have to be indicated per UE. Instead, it may be sufficient or even beneficial for the infrastructure side to receive merely mean values/statistics representing a group of mobile devices (UEs).

Other mobile devices such as device UE-B may reside in RRC_IDLE mode of operation (similar to UE-2.1 described in multicast scenario #2) and/or in RRC_CONNECTED mode of operation (similar to UE-2.2 described in multicast scenario #2) and may be configured to form a D2D-Cluster with at least one further UE that is residing in RRC_CONNECTED mode of operation (here: UE-A). UE-A may be configured to serve as a D2D-Cluster Representative, or all mobile devices may be configured to autonomously pick one of the D2D-Cluster members as a D2D-Cluster Representative. This can be regarded as a form of D2D-Cluster internal role negotiation process (optionally with guidance received from or under surveillance of the infrastructure side).

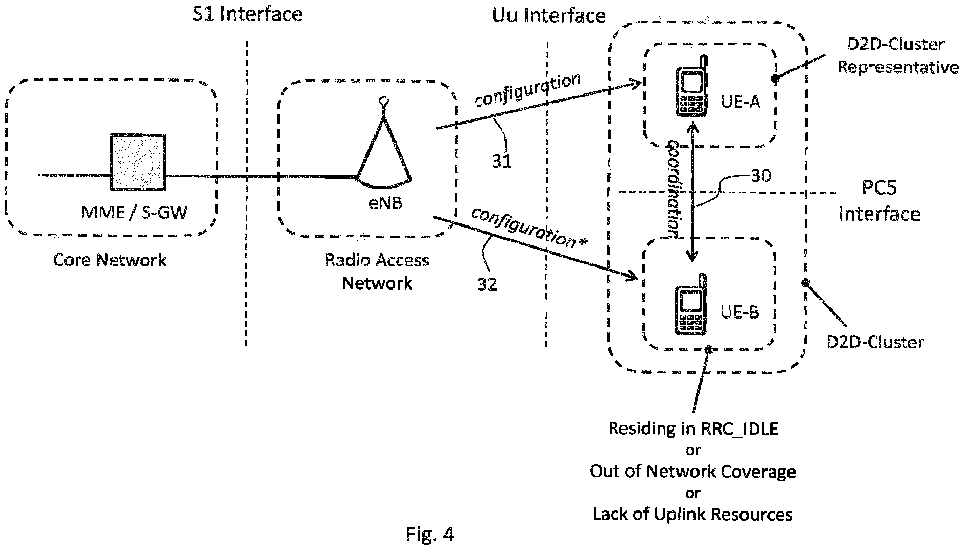

Figure 4 shows the configuration of a D2D-Cluster in accordance with the invention. The double-headed "coordination" arrow 30 is illustrative of negotiations performed to configure the cluster. Information is passed over the Uu interface for configuration of the D2D-Cluster, as shown by arrows 31 and 32.

In the context of the present invention two "configuration" options are described:
Option 1: Configuration of all mobile devices (UE-A and UE-B) for the inventive procedure according to this embodiment happened previously at a point in time when all mobile devices were residing in RRC_CONNECTED.
Option 2: Configuration of mobile devices UE-B happens at a later point in time (when the mobile devices UE-B are no longer residing in RRC_CONNECTED) over a concatenated connection via the LTE Uu interface and the PC5 interface using UE-A as a D2D-Cluster Representative.

The solid arrow "configuration*" 32 in Figure 4 shows the former case (option 1) where configuration happened when the mobile devices UE-B were residing in RRC_CONNECTED mode of operation. The solid arrow "configuration*" 32 would be missing in the latter case (option 2).

In the context of the present invention "configuration" may comprise three aspects:
Appointment/Selection of a D2D-Cluster Representative (role negotiation).
Configuration/Selection of consolidation algorithms (filtering, pre-processing, etc.) for feedback regarding multicast reception and/or measurements.
Configuration of a D2D-Cluster internal "re-transmission" function for multicast data based on a feedback indication mechanism.

### Consolidation of Multicast Feedback

In this embodiment consolidated feedback for UEs that receive multicast data is enabled.

All D2D-Cluster members (regardless of whether they are residing in RRC_IDLE or RRC_CONNECTED) may receive multicast transmissions over the PMCH and/or PDSCH.

The PDSCH may rely on HARQ feedback in uplink direction (e.g., on the PUCCH) even for multicast transmission. Means to reduce the load on the available uplink resources are required, especially when the number of mobile devices receiving multicast over the PMCH and/or PDSCH is sufficiently large. Feedback filtering (or pre-processing) may be applied to reduce the amount of data transmitted.

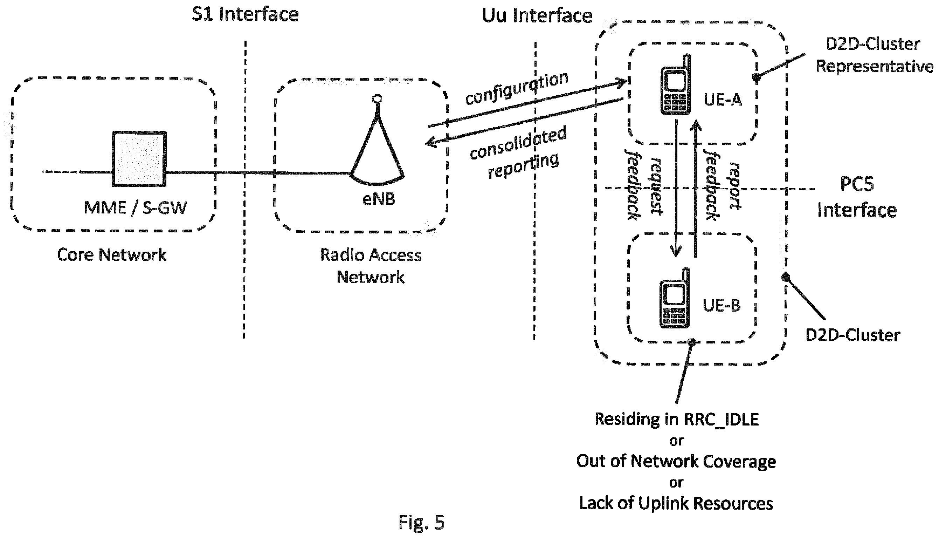

The D2D-Cluster Representative (UE-A) may be configured to request or collect ACK/NACK feedback over the PC5 interface from neighbouring D2D-Cluster members. Likewise, the other D2D-Cluster members (mobile devices UE-B) may be configured to submit their individual ACK/NACK feedback over the PC5 interface to the D2D-Cluster Representative. This is shown in Figure 5.

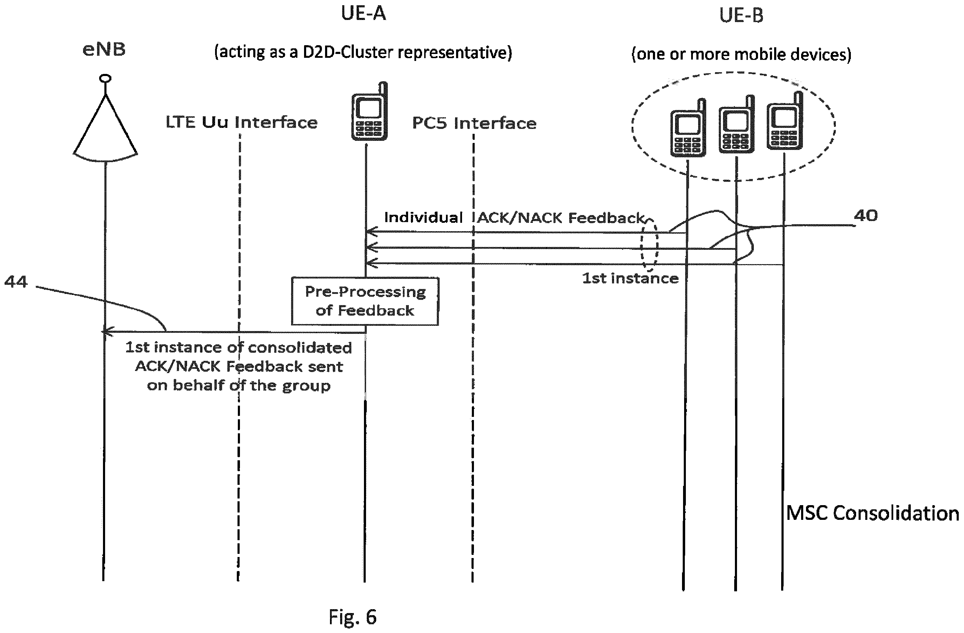

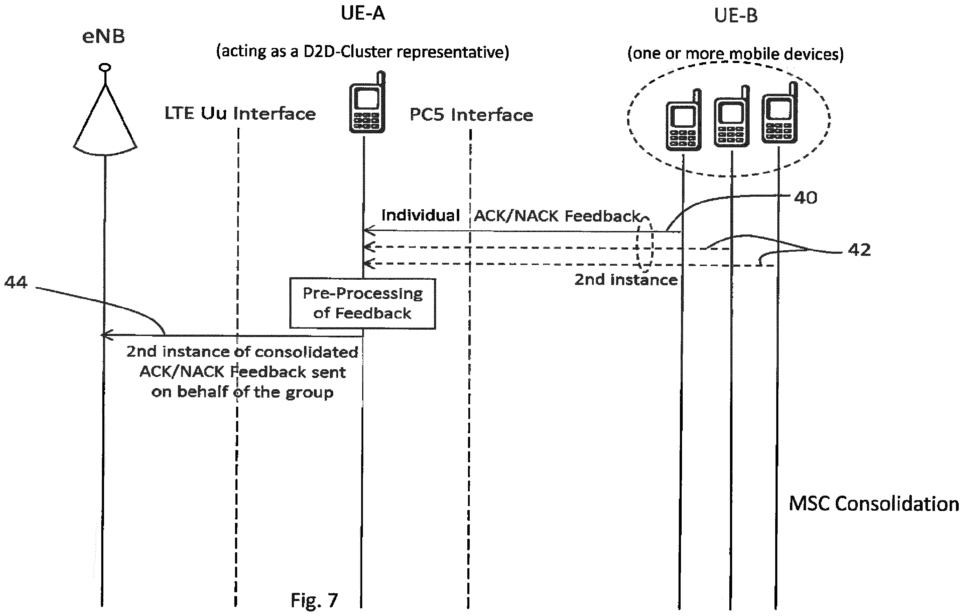

Furthermore, the D2D-Cluster Representative (UE-A) may be configured to pre-process (e.g., consolidate or filter) the feedback information received over the PC5 interface from at least one further mobile device, as shown in the Figures 6 and 7 showing two instances of feedback of information to the eNB. In the example message sequence charts (MSCs) of these figures a solid arrow 40 represents an ACK (positive acknowledgement) from the UE-Bs to the UE-A and a dashed arrow 42 represents a NACK (negative acknowledgement). Similarly, a solid arrow 44 represents consolidated ACK/NACK feedback information being sent by UE-A to the eNB

The D2D-Cluster Representative (UE-A) may also be configured to collect and/or consolidate ACK/NACK feedback about multicast data that was disseminated via two distinct physical channels (i.e. PMCH and PDSCH).

The feedback consolidation algorithms may be activated/deactivated based on the various mobile devices' locations. Location aspects may therefore also be part of the configuration process.

For sake of clarity the transmission (from the base station's point of view) and reception (from mobile devices' point of view) of multicast data is not shown in the example Message Sequence Charts (MSC) of Figures 6 and 7, as this is usually a continuous process.

### ACK/NACK Consolidation Function:

The consolidated feedback sent by the D2D-Cluster Representative (UE-A) on behalf of the entire D2D-Cluster differs between Figure 6 and Figure 7. For example, the first instance of this message (cf. Figure 6) may signal "100% of the recipients in D2D-Cluster XY are happy", while the second instance (cf. Figure 7) may signal "33% of the recipients in D2D-Cluster XY are happy". The infrastructure side may then choose to reconfigure the multicast service accordingly.

It may also be possible for the D2D-Cluster Representative (UE-A) to adjust the reporting frequency for the consolidated feedback based on the "degree of happiness" of the group of mobile devices forming the D2D-Cluster in question, for example as follows:
The reporting frequency for the consolidated feedback is increased when the number of NACKs rises above (or the number of ACKs falls below) a certain threshold.
The reporting frequency for the consolidated feedback is reduced when the number of NACKs falls below (or the number of ACKs rises above) a certain threshold.

An extreme scenario would be that no consolidated feedback is sent at all as long as the various D2D-Cluster members report positive feedback. For example, as long as 90% of the UEs in the D2D-Cluster receive the multicast packets successfully, no feedback is sent. When the percentage of 90% is not reached, negative feedback is sent (either as a simple NACK or with information about the reception success rate.

The D2D-Cluster Representative (UE-A) may consolidate the feedback of all feedback senders (mobile devices UE-B) for example by calculating a ratio of positive versus negative feedback, or by counting the number positive and negative feedback, and so on.

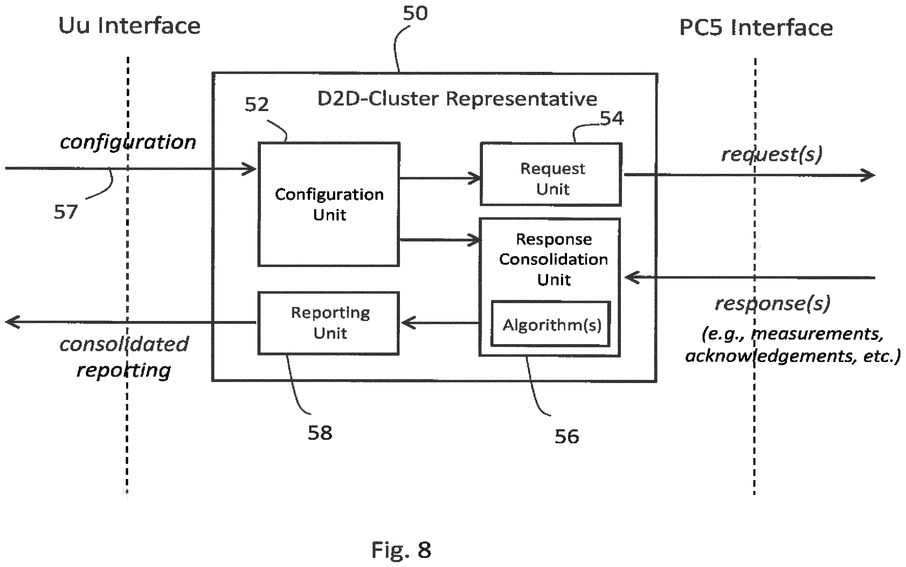

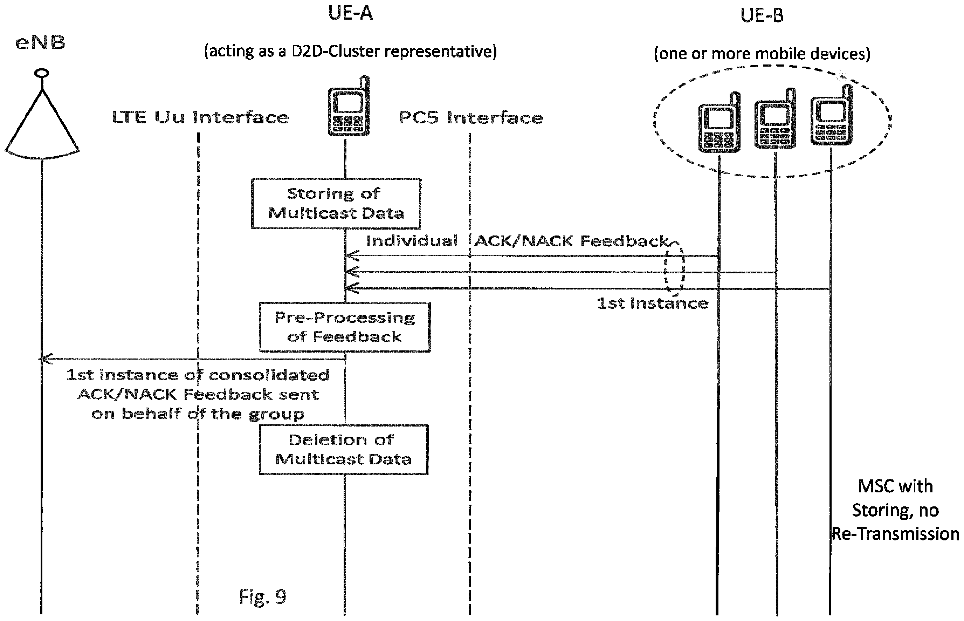

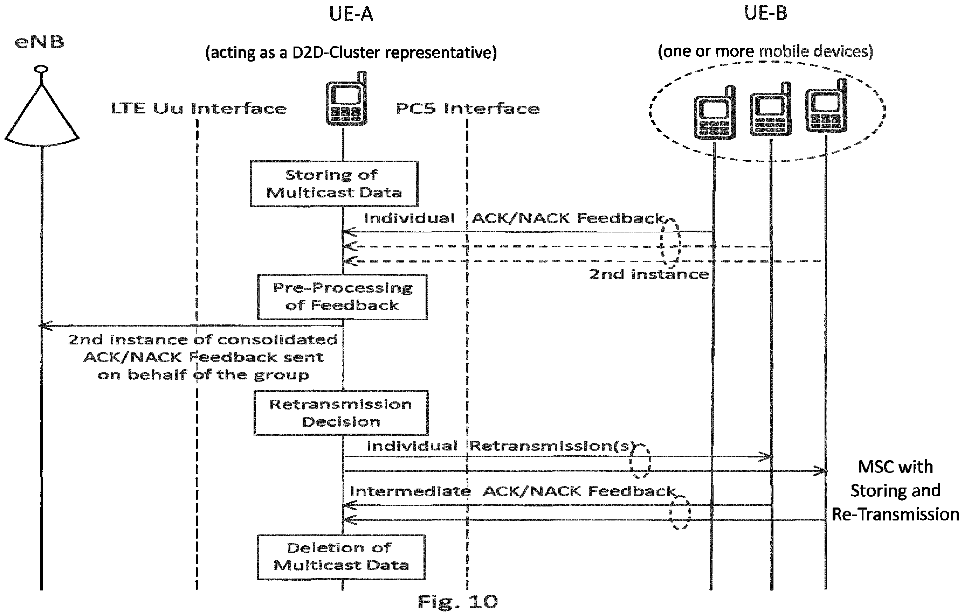

Figure 8 shows a D2D-Cluster Representative 50 with some functional entities for consolidation of feedback and/or measurements according to one embodiment of the present invention. The D2D-Cluster Representative comprises a configuration unit 52 controlling a request unit 54 and a response consolidation unit 56. The configuration unit 52 acts in response to configuration information 57 received over the Uu interface from the eNB. The request unit 54 sends requests to the remaining cluster devices, or UE-Bs over the PC5 interface to send information which is processed by the response consolidation unit 56 before being passed to a reporting unit 58 and thereafter to the eNB via the Uu interface. It will be understood that the units of the D2D-Cluster Representative may be processes operating in a processing unit of the device. A corresponding message sequence chart for the arrangement of Fig. 8 is shown in Figs. 9 and 10. The former shows "storing with no re-transmission" while the latter shows "storing and retransmission"

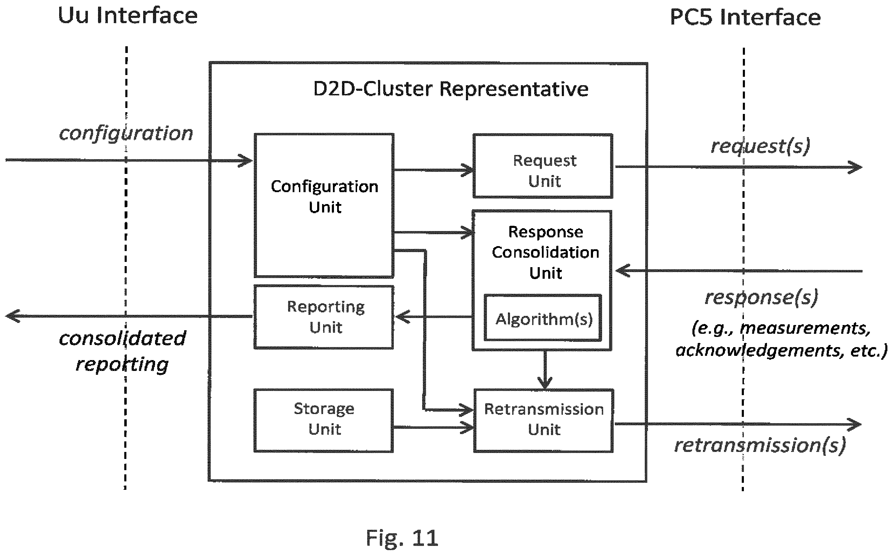

In the embodiment of Fig. 11 (which may be considered an enhancement of the embodiment shown in Figure 8) it is shown how the inventive procedure will enable retransmissions of Multicast data packets over the PC5 interface.

In this embodiment the D2D-Cluster Representative is configured to store multicast data for re-transmission over the PC5 interface at a later point in time (as shown in Figure 9). Similar to Figure 6 above positive feedback (1^{st} instance of individual ACK/NACK feedback) is received over the PC5 interface from all other D2D-Cluster members (solid arrows = ACK). Hence, there is no need for any retransmission of multicast data packets that are stored in the D2D-Cluster Representative. The multicast data packets stored can be erased from the memory of the D2D-Cluster Representative.

In contrast to this, in Figure 10 some feedback (of the 2^{nd} instance of individual ACK/NACK feedback) received over the PC5 interface from the other D2D-Cluster members is negative (dashed arrows = NACK). Hence, there is a need for a retransmission of multicast data packets stored in the D2D-Cluster Representative over the PC5 interface. Correct reception of retransmitted multicast data packets by the D2D-Cluster members may be signalled by means of intermediate ACK/NACK feedback as shown in Figure 10. Once a positive intermediate feedback (solid arrows = ACK) is received from a substantial number of mobile devices UE-B the D2D-Cluster Representative may erase the respective multicast data packets from its memory.

For sake of clarity the transmission (from the base station's point of view) and reception (from mobile devices' point of view) of multicast data is not shown in the example Message Sequence Charts (MSC) of Figures 9 and 10, as this is usually a continuous process. In both figures the reception of a particular multicast data packet to be acknowledged may take place shortly before the "Storing of Multicast Data" occurs.

The D2D-Cluster Representative (UE-A) may also be configured to re-transmit multicast data that was disseminated via two distinct physical channels (i.e. PMCH and PDSCH) thereby merging these two distinct physicals channels for a consolidated re-transmission over the PC5 interface. The novel re-transmission function may be activated/deactivated based on the mobile devices' locations (if needed). Location aspects may therefore also be part of the configuration process.

Figure 11 shows a D2D-Cluster Representative with some functional entities for feedback processing (ACK/NACK collection and evaluation) and re-transmission of multicast data packets according to another embodiment of the present invention.

### A variant of the ACK/NACK Consolidation Function:

The D2D-Cluster Representative (UE-A) may inform the infrastructure about the D2D-Cluster internal re-transmission attempts as part of the consolidated feedback that is sent back to the base station. For this, the order of messages would have to be changed from the order shown in the example MSC of Figure 10 above. The submission of the consolidated feedback message would have to be postponed in the process until the outcome of the D2D-Cluster internal resubmission attempts is known.

### Early Measurement Retrieval from UEs in RRC IDLE

This embodiment shows how the inventive procedure will enable forwarding and consolidation of measurements from UEs in idle mode.

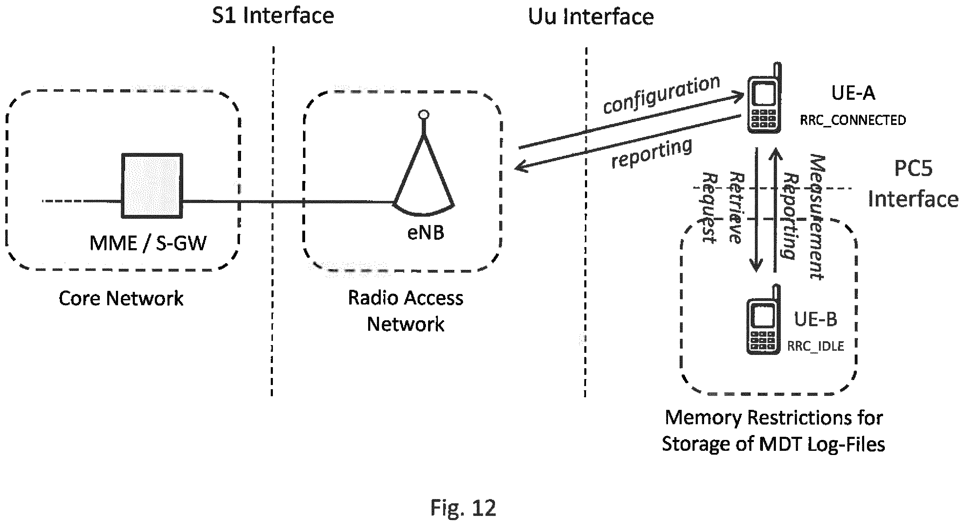

A group of mobile devices UE-B that were previously configured to perform Logged-MDT when they enter RRC_IDLE mode of operation is shown in Figure 12.

Additionally, these UEs may have been configured to form a D2D-Cluster when they come across a further UE that is residing in RRC_CONNECTED mode of operation (here: UE-A) and to indicate availability of measurement reports (e.g., an MDT Log-File) if certain conditions are met, such as "UE-A is trustworthy" or "UE-A belongs to the same MNO" or "UE-A is capable of collecting measurements reports", and so on.

UE-A may be configured to serve as a D2D-Cluster Representative and as such to "listen" on the PC5 interface to messages coming from mobile devices UE-B indicating availability of measurements, and these mobile devices UE-B may be configured to transmit their measurement (e.g., an MDT Log-File) over the PC5 interface when they are instructed to do so by the D2D-Cluster Representative.

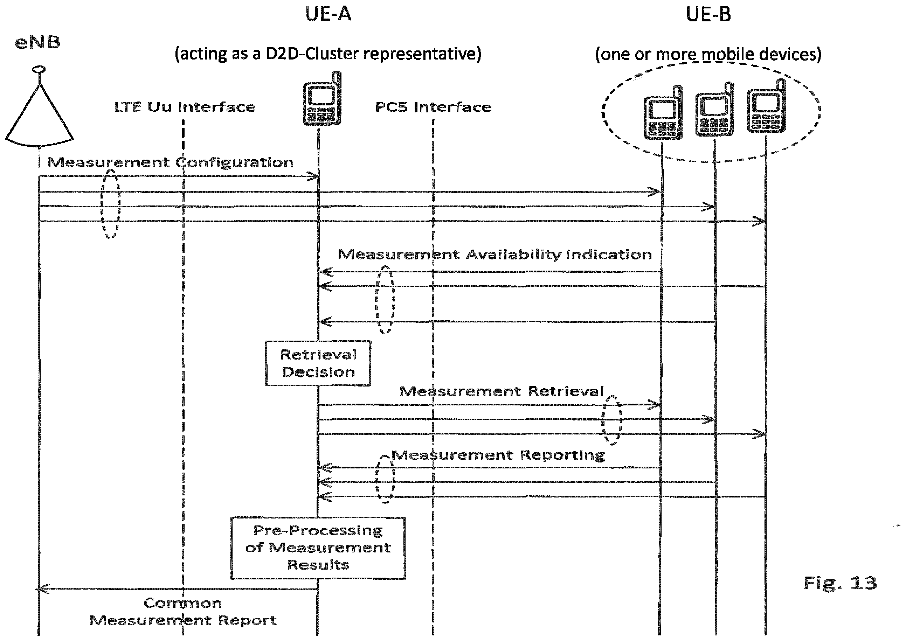

Figure 13 shows an example message sequence chart according to yet another embodiment of the present invention. The mobile devices UE-B may be configured to indicate availability of measurement reports (e.g., presence of an MDT Log-File) to UE-A.

The D2D-Cluster Representative (UE-A) may wait until certain retrieval criteria are met before it kicks off the measurement retrieval procedure (e.g., the collection of MDT Log-Files). For example it may wait until a configurable minimum number of Log-Files or the right type of measurements (category) are available for pre-processing (consolidation operations). In this example, the D2D-Cluster Representative collects three sets of measurements from the other D2D-Cluster members.

The following are possible options:
1) In one embodiment the D2D-Cluster Representative (UE-A) performs a consolidation operation on the sets of measurements received over the PC5 interface before it forward a common measurement report over the LTE Uu interface.
2) In another embodiment the D2D-Cluster Representative (UE-A) does not perform any consolidation operation on the sets of measurements received. It only acts as a forwarding agent for mobile devices UE-B that are residing in RRC_IDLE.
3) The two options 1) and 2) may also be combined, i.e. a consolidation operation may be performed only on a part (sub set) of the measurement values received while other measurements are forwarded to the infrastructure side unaltered.

### Measurement Consolidation Function:

Two examples for measurements that are well suited for the consolidation algorithms according to this invention are:
i) Signal level values, such as SNR (or SINR) of the serving cells and/or neighbouring cells; and
ii) Data throughput values for UL and DL.

Consolidation for these two parameters may, for example, be achieved by calculating from all received values an average value, the best value, and/or the worst value.

## Claims

1. A method of performing minimization of drive tests, MDT, measurement reporting in a mobile communications network, the method comprising:
selecting a first user equipment, UE, device within a cluster of UE devices to be a cluster representative UE device;
providing by other UE devices of the cluster MDT measurement reports to the first UE device via a first radio interface; and
communicating by the first UE device the measurement reports to a base station via a second radio interface,
wherein the UE devices of the cluster are residing in a radio cell coverage of the base station, **characterized in that** the other UE devices being in an RRC_IDLE mode of operation together with the first UE device form the cluster when the other UE devices come across the first UE device that is residing in a RRC_CONNECTED mode of operation, wherein the cluster is a D2D cluster.

2. The method according to claim 1, wherein the other UE devices of the cluster are configured to perform logged-MDT measurements.

3. The method according to claim 1 or claim 2, wherein the other UE devices transmit the MDT measurement reports to the first UE device over a PC5 interface.

4. The method according to any preceding claim, wherein the first UE device instructs the other UE devices to transmit the MDT measurement reports.

5. The method according to any preceding claim, wherein the other UE devices inform the first UE device as to an availability of the MDT measurement report before this is transmitted to the first UE device.

6. The method according to any preceding claim wherein the first UE device processes the MDT measurement reports received from the other UE devices to consolidate sets of measurements before sending a consolidated measurement report to the base station.

7. The method according to claim 6, wherein the consolidated measurement report provides consolidated information for UE devices in the cluster concerning at least one of measured signal level values and data throughput rates.

## Patentansprüche

1. Verfahren zum Durchführen von Drive-Test-Minimierung- bzw. MDT(Minimization of Drive Tests)-Messberichterstattung in einem Mobilkommunikationsnetz, wobei das Verfahren Folgendes umfasst:
dahingehendes Auswählen eines ersten Benutzereinrichtungs- bzw. UE(User Equipment)-Geräts innerhalb eines Clusters von UE-Geräten, ein für den Cluster repräsentatives UE-Gerät zu sein;
Liefern von MDT-Messberichten durch andere UE-Geräte des Clusters an das erste UE-Gerät über eine erste Funkschnittstelle; und
Kommunizieren der Messberichte durch das erste UE-Gerät an eine Basisstation über eine zweite Funkschnittstelle,
wobei sich die UE-Geräte des Clusters in einer Funkzellenabdeckung der Basisstation befinden, **dadurch gekennzeichnet, dass** die anderen UE-Geräte, die sich in einem RRC_IDLE-Betriebsmodus befinden, zusammen mit dem ersten UE-Gerät den Cluster bilden, wenn die anderen UE-Geräte das erste UE-Gerät, das sich in einem RRC_CONNECTED-Betriebsmodus befindet, antreffen, wobei es sich bei dem Cluster um einen D2D-Cluster handelt.

2. Verfahren nach Anspruch 1, wobei die anderen UE-Geräte des Clusters zum Durchführen von Protokollierte-MDT-Messungen ausgelegt sind.

3. Verfahren nach Anspruch 1 oder Anspruch 2, wobei die anderen UE-Geräte die MDT-Messberichte über eine PC5-Schnittstelle an das erste UE-Gerät übertragen.

4. Verfahren nach einem vorhergehenden Anspruch, wobei das erste UE-Gerät die anderen UE-Geräte dazu anweist, die MDT-Messberichte zu übertragen.

5. Verfahren nach einem vorhergehenden Anspruch, wobei die anderen UE-Geräte das erste UE-Gerät hinsichtlich einer Verfügbarkeit des MDT-Messberichts informieren, bevor dieser an das erste UE-Gerät übertragen wird.

6. Verfahren nach einem vorhergehenden Anspruch, wobei das erste UE-Gerät die von den anderen UE-Geräten empfangenen MDT-Messberichte verarbeitet, um Sätze von Messungen zusammenzufassen, bevor es einen zusammengefassten Messbericht an die Basisstation sendet.

7. Verfahren nach Anspruch 6, wobei der zusammengefasste Messbericht zusammengefasste Informationen für UE-Geräte in dem Cluster bereitstellt, die gemessene Signalpegelwerte und/oder Datendurchsatzraten betreffen.

## Revendications

1. Procédé de réalisation d'un rapport de mesure de minimisation d'essais de conduite, MDT, dans un réseau de communication mobile, le procédé comprenant les étapes suivantes :
sélectionner un premier dispositif d'équipement utilisateur, UE, au sein d'une grappe de dispositifs d'UE pour qu'il soit un dispositif d'UE représentatif de la grappe ;
fournir par d'autres dispositifs d'UE de la grappe, des rapports de mesure au premier dispositif d'UE par l'intermédiaire d'une première interface radio ; et
communiquer, par le premier dispositif d'UE, les rapports de mesure à une station de base par l'intermédiaire d'une seconde interface radio,
où les dispositifs d'UE de la grappe se situent dans une couverture de cellules radio de la station de base,
**caractérisé en ce que** les autres dispositifs d'UE étant dans un mode de fonctionnement RRC_IDLE avec le premier dispositif d'UE forment la grappe lorsque les autres dispositifs d'UE rencontrent le premier dispositif d'UE qui se trouve dans un mode de fonctionnement RRC_CONNECTED, où la grappe est une grappe D2D.

2. Procédé selon la revendication 1, dans lequel les autres dispositifs d'UE de la grappe sont configurés pour effectuer des mesures de MDT enregistrées.

3. Procédé selon la revendication 1 ou la revendication 2, dans lequel les autres dispositifs d'UE transmettent les rapports de mesure de MDT au premier dispositif d'UE par l'intermédiaire d'une interface PC5.

4. Procédé selon l'une quelconque des revendications précédentes, dans lequel le premier dispositif d'UE donne pour instruction aux autres dispositifs d'UE de transmettre les rapports de mesure de MDT.

5. Procédé selon l'une quelconque des revendications précédentes, dans lequel les autres dispositifs d'UE informent le premier dispositif d'UE de la disponibilité du rapport de mesure de MDT avant que celui-ci ne soit transmis au premier dispositif d'UE.

6. Procédé selon l'une quelconque des revendications précédentes, dans lequel le premier dispositif d'UE traite les rapports de mesure de MDT reçus des autres dispositifs d'UE pour consolider des ensembles de mesures avant d'envoyer un rapport de mesure consolidé à la station de base.

7. Procédé selon la revendication 6, dans lequel le rapport de mesure consolidé fournit des informations consolidées pour les dispositifs d'UE dans la grappe concernant au moins un élément parmi des valeurs de niveau de signal mesurées et des débits de données.
